# EUROPEAN PATENT APPLICATION

(11) **EP 4 806 938 A1**
(43) Date of publication of application: **16.09.2026**
(21) Application number: 26163261.6
(22) Date of filing: 09.03.2026
(51) Int. Cl.: C08G 63/16, C08J 5/18, C08L 67/02

(54) **ALIPHATIC POLYESTER AND USE THEREOF**

(30) Priority: 10.03.2025 CN 202510276895
(71) Applicant: KINGFA SCI. & TECH. CO., LTD., Guangzhou, Guangdong 510663 (CN); Zhuhai Kingfa Biomaterial Co., Ltd., Zhuhai, Guangdong 519050 (CN); Liaoning Kingfa Biomaterial Co., Ltd., Panjin City, Liaoning Province 124000 (CN)
(72) Inventor: Lu, Changli, Guangzhou 510663 (CN); Chen, Pingxu, Guangzhou 510663 (CN); Ye, Nanbiao, Guangzhou 510663 (CN); Zeng, Xiangbin, Guangzhou 510663 (CN); Fu, Xuejun, Guangzhou 510663 (CN); Ouyang, Chunping, Guangzhou 510663 (CN); Zhang, Erjie, Guangzhou 510663 (CN); Ye, Jiaqi, Guangzhou 510663 (CN); Zhang, Hao, Guangzhou 510663 (CN); Chen, Meiqi, Guangzhou 510663 (CN)
(74) Representative: Petraz, Gilberto Luigi

(57) **Abstract**

The present invention provides an aliphatic polyester and use thereof. The aliphatic polyester includes a dicarboxylic acid residue and a diol residue; the dicarboxylic acid residue includes the following residues: a1), based on a total molar percentage content of a1) and a2) as 100 mol%, 65-90 mol% of a succinic acid residue; and a2), based on the total molar percentage content of a1) and a2) as 100 mol%, 10-35 mol% of a sebacic acid residue; the diol residue is selected from a 1,4-butanediol residue with a molar content at least equal to that of the dicarboxylic acid residue; and the aliphatic polyester includes an oligomer with a number-average molecular weight < 1,000 as measured by gel permeation chromatography (GPC), and a mass percentage content of the oligomer with the number-average molecular weight < 1,000 as measured by GPC in the aliphatic polyester is 0.08-3.5 wt%. A packaging film prepared from the aliphatic polyester possesses both good food contact performance and unwinding performance.

## Description

### TECHNICAL FIELD

The present invention belongs to the technical field of polyester materials, and particularly relates to an aliphatic polyester and use thereof.

### BACKGROUND

Plastic wraps are a kind of film plastic packaging products, which can not only prolong the storage time of food, but also retain the moisture of stored food to maintain its freshness; and more importantly, when used for opened beverages, fruits, or tableware, they can also play a role in isolating bacteria to improve hygiene and safety. Therefore, the plastic wraps have been widely used in fields such as household life, supermarkets, or industrial food packaging. However, most conventional plastic wraps adopt a polyethylene film, a biaxially oriented polyester film (BOPET), a biaxially oriented polypropylene film (BOPP), or a chlorinated polypropylene film (CPP), etc., and all of these plastic wraps are not biodegradable and are likely to form "white pollution" after being discarded.

To address the problem of difficult degradation of the conventional plastic wraps, biodegradable polyesters, such as poly(butylene adipate-co-terephthalate) (PBAT) materials, have been adopted to replace the above conventional film materials to improve the degradability of the plastic wraps. However, mutual entanglement between molecular chains of a PBAT resin, low crystallization speeds of the materials, and high viscosity of the film materials lead to the problems of easy adhesion to stainless steel rollers and frequent film breakage occurring during preparation of the plastic wraps by casting, thereby affecting processing stability. Meanwhile, the high viscosity of the film materials also leads to the inability to effectively unwind the prepared plastic wraps during use, thereby reducing the use experience of customers. To reduce the viscosity of the PBAT resin and improve unwinding performance, in the prior art, the way of blending PBAT with a lubricant, such as epoxidized soybean oil, is mostly adopted to enhance the unwinding performance of PBAT plastic wraps. However, due to a polarity difference between the lubricant and the PBAT resin, migration and precipitation easily occur during use, thereby increasing a food contact risk.

Based on this, the development of a degradable plastic wrap with both good unwinding performance and a low food contact risk is a problem to be solved urgently in the field.

### SUMMARY

In view of the shortcomings of the prior art, an objective of the present invention is to provide an aliphatic polyester and use thereof. The aliphatic polyester is used for preparing packaging films, especially food-grade packaging films, which solves the problem in the prior art that packaging films cannot possess both good unwinding performance and food contact performance, and meanwhile, also has good degradability and can meet requirements such as home composting.

To achieve the objective, the present invention adopts the following technical solutions.

In a first aspect, the present invention provides an aliphatic polyester, where the aliphatic polyester includes a dicarboxylic acid residue and a diol residue; the dicarboxylic acid residue includes the following residues: a1), based on a total molar percentage content of a1) and a2) as 100 mol%, 65-90 mol% of a succinic acid residue; and a2), based on the total molar percentage content of a1) and a2) as 100 mol%, 10-35 mol% of a sebacic acid residue; the diol residue is selected from a 1,4-butanediol residue with a molar content at least equal to that of the dicarboxylic acid residue; and the aliphatic polyester includes an oligomer with a number-average molecular weight < 1,000 as measured by gel permeation chromatography (GPC), and a mass percentage content of the oligomer with the number-average molecular weight < 1,000 as measured by GPC in the aliphatic polyester is 0.08-3.5 wt%.

In the present invention, succinic acid and/or a succinic acid derivative is introduced into a polyester molecular chain via a polymerization reaction to form the succinic acid residue; sebacic acid and/or a sebacic acid derivative is introduced into the polyester molecular chain via a polymerization reaction to form the sebacic acid residue; and poly(butylene succinate-co-sebacate) formed from succinic acid and/or its derivatives, sebacic acid and/or its derivatives, and 1,4-butanediol has good degradability and can meet requirements for home composting and degradation. However, when the succinic acid and the sebacic acid react with the 1,4-butanediol, an oligomer with a degree of polymerization of 1-8 is extremely likely to be generated, resulting in a too high content of the oligomer (> 4 wt%) in the obtained aliphatic polyester. When getting contact with acidic or alcoholic food, the oligomer is prone to migration and precipitation, posing a food contact risk. Thus, those skilled in the art tend to decrease the content of the oligomer. However, the inventor has found that during processing, the presence of the oligomer can play a good lubrication role, which is conducive to decreasing the viscosity of the system, such that a prepared packaging film has good unwinding performance. Therefore, in the present invention, by controlling a molar ratio of the succinic acid residue to the sebacic acid residue in the poly(butylene succinate-co-sebacate) and meanwhile controlling the content of the oligomer in the aliphatic polyester within a specific range, the packaging film prepared from the aliphatic polyester possesses both good unwinding performance and food contact performance, and meanwhile, also has good degradability and can meet requirements such as home composting.

It should be noted that the "residue" refers to any organic structure of a relevant monomer introduced into a polymer molecular chain via a polycondensation reaction, that is, the organic structure derived from the corresponding monomer; and for example, the dicarboxylic acid residue refers to a structure derived from a dicarboxylic acid monomer in the aliphatic polyester.

In the present invention, the succinic acid derivative includes an alkyl succinate; exemplarily, the alkyl succinate may be at least one of dimethyl succinate, diethyl succinate, di-n-propyl succinate, diisopropyl succinate, di-n-butyl succinate, diisobutyl succinate, di-tert-butyl succinate, di-n-pentyl succinate, diisopentyl succinate, and di-n-hexyl succinate; and the alkyl succinate may be an alkyl ester formed from succinic acid or an alkyl ester formed from succinic anhydride, and dimethyl succinate formed from succinic anhydride is preferably used.

In the present invention, the sebacic acid derivative includes an alkyl sebacate; exemplarily, the alkyl sebacate may be at least one of dimethyl sebacate, diethyl sebacate, di-n-propyl sebacate, diisopropyl sebacate, di-n-butyl sebacate, diisobutyl sebacate, di-tert-butyl sebacate, di-n-pentyl sebacate, diisopentyl sebacate, and di-n-hexyl sebacate; and the alkyl sebacate may be an alkyl ester formed from sebacic acid or an alkyl ester formed from sebacic anhydride.

In the present invention, the oligomer includes a linear or cyclic polyester oligomer generated by a reaction of a dicarboxylic acid and a diol; and further includes a cyclic oligomer generated by "back-biting" of end groups due to thermal decomposition of a prepolymer or a polycondensate during pre-polymerization and polycondensation.

In the present invention, the content of the oligomer may be tested by a gel permeation chromatograph (GPC).

Preferably, the oligomer in the aliphatic polyester has the following characteristics: 0.05 wt% < q₁ < 1.0 wt%, and 0.1 wt% < q₂ < 2.5 wt%, where q₁ is a mass percentage content of an oligomer with a number-average molecular weight of less than 500 in the aliphatic polyester as measured by GPC, and q₂ is a mass percentage content of an oligomer with a number-average molecular weight of less than 1,000 in the aliphatic polyester as measured by GPC; and more preferably, 0.08 wt% < q₁ < 0.8 wt%, and 0.15 wt% < q₂ < 2.1 wt%.

Preferably, q₁ is 0.1-0.6 wt%.

Preferably, q₂ is 0.2-1.3 wt%.

Preferably, a ratio of q₂ to q₁ is < 2, the ratio of q₂ to q₁ is further preferably < 1.5, and the ratio of q₂ to q₁ is more preferably 1.1-1.45.

Preferably, the dicarboxylic acid residue includes the following residues: a1), based on the total molar percentage content of a1) and a2) as 100 mol%, 70-87 mol% of the succinic acid residue; and a2), based on the total molar percentage content of a1) and a2) as 100 mol%, 13-30 mol% of the sebacic acid residue; and more preferably, the dicarboxylic acid residue includes the following residues: a1), based on the total molar percentage content of a1) and a2) as 100 mol%, 74-85 mol% of the succinic acid residue; and a2), based on the total molar percentage content of a1) and a2) as 100 mol%, 15-26 mol% of the sebacic acid residue.

In the present invention, considering the aging resistance, hydrolysis resistance, degradability, and cost of the aliphatic polyester, preferably, according to GB/T 32366-2015, a carboxyl content of the aliphatic polyester is < 40 mol/t, further preferably < 30 mol/t, more preferably < 22 mol/t, and particularly preferably 8-20 mol/t.

In the present invention, the carboxyl content may be controlled by changing conditions such as an alcohol-to-acid ratio, a polymerization temperature, and a polymerization time to regulate a reaction degree or by suppressing thermal decomposition; and in addition, the carboxyl content may also be controlled by inhibiting the types or quantities of impurities in raw materials, such as nitrogen compounds and metal ions.

Considering production efficiency and mechanical and physical properties of a molded product, preferably, according to GB/T 17931-1999, an intrinsic viscosity of the aliphatic polyester is 1-3 dL/g, preferably 1.5-2.2 dL/g, further preferably 1.58-2.11 dL/g, more preferably 1.67-2.02 dL/g, and particularly preferably 1.82-1.95 dL/g.

In the present invention, a method for preparing the aliphatic polyester is not particularly limited, and any method capable of preparing the aliphatic polyester with a specific oligomer content in the present invention may be used; and preferably, the method for preparing the aliphatic polyester includes the following steps:
(1) allowing a dicarboxylic acid and a diol to carry out a reaction to obtain an esterification product;
(2) allowing the esterification product obtained in the step (1) to carry out a pre-polymerization reaction to obtain a pre-polymerization product;
(3) allowing the pre-polymerization product obtained in the step (2) to carry out a polycondensation reaction to obtain a polycondensation product; and
(4) allowing the polycondensation product obtained in the step (3) to carry out contact treatment with an organic solvent to obtain the aliphatic polyester.

In the present invention, in the step (1), the dicarboxylic acid is succinic acid and/or a succinic acid derivative, as well as sebacic acid and/or a sebacic acid derivative; the dicarboxylic acid may be used alone, and may also be a mixture of at least two kinds; and the diol is 1,4-butanediol.

In the present invention, the succinic acid and/or the succinic acid derivative is not particularly limited in source, which may be derived from bio-based succinic acid and/or a succinic acid derivative (that is, a raw material for preparation is a biomass resource), and may also be derived from petroleum-based succinic acid and/or a succinic acid derivative (that is, a raw material for preparation is derived from a petroleum resource).

In the present invention, a molar ratio of the diol to the dicarboxylic acid in the step (1) is (1.2-3):1, for example, may be 1.2:1, 1.5:1, 1.8:1, 2:1, 2.2:1, 2.5:1, 2.8:1, 3:1, or a range between any of the above numerical values, and is more preferably (1.4-2):1.

In the present invention, in the step (1), the raw material for the reaction further includes a cross-linking agent; based on a total mass of the dicarboxylic acid and the diol as 100 wt%, a mass of the cross-linking agent is 0-3 wt%; the cross-linking agent includes at least one of a polyol, a polyacid, or a polyacid anhydride; and exemplarily, the cross-linking agent includes, but is not limited to, tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, pyromellitic dianhydride, etc.

In the present invention, the reaction in the step (1) includes an esterification reaction and/or a transesterification reaction; the reaction is carried out at a temperature of 140-220°C and a pressure of 0.7-1.4 bar for a time of 2-5 h; and further preferably, the reaction is carried out at a temperature of 165-212°C and a pressure of 0.78-1.2 bar for a time of 2.4-4.5 h.

In the present invention, the step (1) may be carried out in a mixing device, where the dicarboxylic acid and the diol are mixed to obtain a slurry, and then heated to carry out the reaction.

In the present invention, a carboxyl content of the esterification product in the step (1) is 245-575 mol/t, more preferably 310-420 mol/t.

In the present invention, after the reaction in the step (1), the method further includes a step of removing an excessive amount of the diol by distillation, the removed diol may be purified by distillation to reuse as a raw material, and a purity of the purified diol is ≥ 95%.

In the present invention, the pre-polymerization reaction in the step (2) is carried out at a temperature of 230-260°C and a pressure of 0.3-0.8 bar for a time of 70-200 min; and further preferably, the reaction is carried out at a temperature of 235-246°C and a pressure of 0.35-0.65 bar for a time of 90-130 min.

In the present invention, the step (2) may be carried out in a pre-polymerization reactor.

In the present invention, a carboxyl content of the pre-polymerization product in the step (2) is 40-90 mol/t, more preferably 60-80 mol/t.

In the present invention, the polycondensation reaction in the step (3) is carried out at a temperature of 235-260°C and a pressure of 0.2-5 mbar for a time of 40-110 min; and further preferably, the reaction is carried out at a temperature of 238-250°C and a pressure of 0.5-2 mbar for a time of 48-98 min.

In the present invention, a carboxyl content of the polycondensation product in the step (3) is < 50 mol/t, preferably < 35 mol/t, and more preferably 10-25 mol/t.

In the present invention, the step (3) may be carried out in a finishing device suitable for the polycondensation reaction, such as a rotary reactor, a cage reactor, and a horizontal reactor.

In the present invention, the reactions in the step (1), the step (2), and the step (3) are each independently carried out in the presence of a catalyst; the catalyst in the step (1), the step (2), and the step (3) may be the same or different; and the catalyst may be an externally added catalyst or a catalyst present in the system. The catalyst may be a tin compound, an antimony compound, a cobalt compound, a lead compound, a zinc compound, an aluminum compound, or a titanium compound, more preferably the zinc compound, the aluminum compound, or the titanium compound, and most preferably the titanium compound; the titanium compound may be tetrabutyl titanate or tetraisopropyl titanate; and compared with other compounds, the titanium compound has a lower residual content in a product or downstream product and lower toxicity. It is particularly suitable for preparing biodegradable polyesters, which can directly enter the environment in the form of compost bags or mulching films.

In the present invention, based on a total mass of the raw material for the reaction (the dicarboxylic acid, the diol, and optionally the cross-linking agent) as 100 wt%, a total mass of the catalyst is 0.001-1 wt%.

In the present invention, other auxiliary agents may be added during the reaction in the step (3) according to actual needs; and the other auxiliary agents include, but are not limited to, a catalyst passivator, a color stabilizer, an activator, etc.

The catalyst passivator includes, but is not limited to, a phosphorus compound; the phosphorus compound includes, but is not limited to, one or more of phosphorous acid and phosphoric acid; and based on a mass of the pre-polymerization product as 100 wt%, a mass of the catalyst passivator is 0.001-0.1 wt%, preferably 0.01-0.05 wt%. Exemplarily, when a highly active titanium compound is selected as the catalyst, the catalyst passivator may be added, where a molar ratio of Ti to P is (1.1-1.5):1, particularly preferably (1.1-1.3):1.

The color stabilizer includes, but is not limited to, a phosphorus compound; the phosphorus compound includes, but is not limited to, one or more of phosphoric acid, phosphorous acid, triphenyl phosphite, triphenyl phosphate, sodium hypophosphite, and sodium phosphite; and the use of the color stabilizer usually results in a decrease in condensation rate. Therefore, the triphenyl phosphate, which does not adversely affect the condensation rate, is preferably used as the color stabilizer. Based on the mass of the pre-polymerization product as100 wt%, a mass of the color stabilizer is 0.001-1.5 wt%, preferably 0.01-1.0 wt%; and when the catalyst is selected from the titanium compound, a molar ratio of Ti to P is 1:(0.3-1.0), particularly preferably 1:(0.5-1.0).

The activator includes, but is not limited to, a phosphorus compound; the phosphorus compound includes, but is not limited to, one or more of disodium hydrogen phosphate, calcium hypophosphite, calcium phosphite, calcium phosphate, sodium hypophosphite, sodium phosphite, triphenyl phosphite, triphenyl phosphate, trimethyl phosphate, triethyl phosphate, tripropyl phosphate, and tributyl phosphate. Based on the mass of the pre-polymerization product as 100 wt%, a mass of the activator is 0.001-1.5 wt%, preferably 0.01-1.0 wt%; and when the catalyst is selected from the titanium compound, a molar ratio of Ti to P is (1.0-1.5):1, particularly preferably (1.1-1.3):1.

More preferably, the color stabilizer and the activator are used in combination, and for example, triphenyl phosphate and disodium hydrogen phosphate are used in combination.

In the present invention, after the polycondensation reaction, the method further includes a chain propagation reaction, that is, a product (polycondensation product) obtained from the polycondensation reaction is allowed to react with a chain extender to obtain a chain propagation product.

In the present invention, the chain extender includes one or more of an isocyanate, a peroxide, an epoxide, oxazoline, oxazine, caprolactam, or carbodiimide.

In the present invention, the isocyanate may use an aromatic diisocyanate and/or an aliphatic diisocyanate, and the aromatic diisocyanate may be toluene-2,4-diisocyanate, toluene-2,6-diisocyanate, diphenylmethane-2,2'-diisocyanate, diphenylmethane-2,4'-diisocyanate, diphenylmethane-4,4'-diisocyanate, naphthalene-1,5-diisocyanate, or xylene diisocyanate; and particularly preferably, the diphenylmethane-2,2'-diisocyanate, the diphenylmethane-2,4'-diisocyanate, or the diphenylmethane-4,4'-diisocyanate is used. The aromatic diisocyanate may also use a polynuclear aromatic diisocyanate, such as tris(4-isocyanato-phenyl)methane having three rings, which may be formed during a production process of a diisocyanate having one or two rings. The aliphatic diisocyanate may be a linear or branched alkylene diisocyanate containing 2-20 carbon atoms, or a cycloalkylene diisocyanate containing 3-20 carbon atoms; and exemplarily, the aliphatic diisocyanate includes hexamethylene diisocyanate, pentamethylene diisocyanate, isophorone diisocyanate, or methylene bis(4-isocyanatocyclohexane) diisocyanate. The hexamethylene diisocyanate is particularly preferred.

In the present invention, based on a total mass of the polycondensation product, a mass of the isocyanate may be 0.05-2 wt%, particularly preferably 0.1-1.5 wt%.

In the present invention, the peroxide may be one or more of benzoyl peroxide, 1,1-di(tert-butylperoxy)-3,3,5-trimethylcyclohexane, 1,1-di(tert-butylperoxy)methylcyclododecane, n-butyl 4,4-di(butylperoxy)valerate, dicumyl peroxide, tert-butyl peroxybenzoate, dibutyl peroxide, α,α-di(tert-butylperoxy)diisopropylbenzene, 2,5-dimethyl-2,5-di(tert-butylperoxy)hexane, 2,5-dimethyl-2,5-di(tert-butylperoxy)hexan-3-acetylene, or tert-butylperoxy cumene.

In the present invention, based on the total mass of the polycondensation product, a mass of the peroxide may be 0.1-2 wt%, particularly preferably 0.2-1 wt%.

In the present invention, the epoxide may be one or more of diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethylene glycol diglycidyl ether, diethylene glycol diglycidyl ether, polyethylene glycol diglycidyl ether, propylene glycol diglycidyl ether, dipropylene glycol diglycidyl ether, polypropylene glycol diglycidyl ether, polybutylene glycol diglycidyl ether, and a copolymer containing an epoxy group based on styrene, acrylate and/or methacrylate.

In the present invention, based on the total mass of the polycondensation product, a mass of the epoxide may be 0.1-2 wt%, preferably 0.2-1 wt%.

In the present invention, the oxazoline may be selected from one or more of 2,2'-bis(2-oxazoline), bis(2-oxazolinyl)methane, 1,2-bis(2-oxazolinyl)ethane, 1,3-bis(2-oxazolinyl)propane, 1,4-bis(2-oxazolinyl)butane, 1,4-bis(2-oxazolinyl)benzene, 1,2-bis(2-oxazolinyl)benzene, or 1,3-bis(2-oxazolinyl)benzene. The oxazine may be selected from one or more of 2,2'-bis(2-dioxazine), bis(2-dioxazinyl)methane, 1,2-bis(2-dioxazinyl)ethane, 1,3-bis(2-dioxazinyl)propane, 1,4-bis(2-dioxazinyl)butane, 1,4-bis(2-dioxazinyl)benzene, 1,2-bis(2-dioxazinyl)benzene, or 1,3-bis(2-dioxazinyl)benzene. The carbodiimide may be selected from one or more of N,N'-di-2,6-diisopropylphenylcarbodiimide, N,N'-di-o-tolylcarbodiimide, N,N'-diphenylcarbodiimide, N,N'-dioctyldecylcarbodiimide, N,N'-di-2,6-dimethylphenylcarbodiimide, N-tolyl-N'-cyclohexylcarbodiimide, N,N'-di-2,6-di-tert-butylphenylcarbodiimide, N,N'-di-2,4,6-triisobutylphenylcarbodiimide, diisopropylcarbodiimide, dimethylcarbodiimide, diisobutylcarbodiimide, dioctylcarbodiimide, tert-butylisopropylcarbodiimide, di-β-naphthylcarbodiimide, or di-tert-butylcarbodiimide.

In the present invention, based on the total mass of the polycondensation product, the mass of the oxazoline, the oxazine, the caprolactam, and the carbodiimide is each independently 0.1-2 wt%, preferably 0.2-1 wt%.

In the present invention, the chain propagation reaction is carried out at a temperature of 170-245°C, and further preferably, the reaction is carried out at a temperature of 180-235°C; and the reaction is carried out under superatmospheric pressure or atmospheric pressure, depending on the system used.

In the present invention, the chain propagation reaction may be carried out in an extruder, a continuous kneader (List reactor), or a static mixer. The extruder may be a single-screw extruder or a twin-screw extruder; and the static mixer may use SMR, SMX, or SMXL components, or a combination thereof. Examples of the List reactor include a single-shaft DISCOTHERM B or twin-shaft CRP or ORP reactor, the chain propagation reaction is preferably carried out in the extruder, and a residence time in the extruder is 2-15 min, more preferably 4-13 min.

In the present invention, before the contact treatment in the step (4), the method further includes a step of slicing the polycondensation product, a slice size is defined by a weight of 100 grains (hundred-grain weight), and the hundred-grain weight of the sliced polycondensation product is 2.2-6.0 g, preferably 3.0-4.5 g.

In the present invention, a mass ratio of the polycondensation product to the organic solvent in the step (4) is 1:(1-10), for example, may be 1:1, 1:2, 1:3, 1:4, 1:5, 1:6, 1:7, 1:8, 1:9, 1:10, or a range between any of the above numerical values, and is more preferably 1:(2-6).

In the present invention, in order to facilitate the volatilization of the organic solvent in subsequent processes and to decrease a residue of the organic solvent in the polyester product, the organic solvent with a boiling point not exceeding 100°C is preferably used.

Preferably, the organic solvent includes at least one of a ketone compound, an alcohol compound, an ether compound, and an aliphatic hydrocarbon compound; the ketone compound includes, but is not limited to, acetone and/or butanone, preferably acetone; the alcohol compound includes, but is not limited to, methanol, ethanol, isopropanol, etc.; the ether compound includes, but is not limited to, at least one of ethyl ether, propyl ether, and tetrahydrofuran, preferably tetrahydrofuran; and the aliphatic hydrocarbon compound includes, but is not limited to, at least one of n-hexane, n-heptane, and cyclohexane, preferably n-hexane and/or cyclohexane.

In the present invention, the organic solvent may be a pure organic solvent or an aqueous solution of an organic solvent; and when the aqueous solution of the organic solvent is selected, a mass concentration of the aqueous solution of the organic solvent is 35-90 wt%.

In the present invention, the contact treatment in the step (4) is carried out at a temperature of 35-80°C for a time of 3-20 h; and preferably, the contact treatment is carried out at a temperature of 40-55°C for a time of 8-18 h.

In the present invention, the content of the oligomer in the aliphatic polyester can be regulated by the contact treatment, and specifically, by controlling the temperature and time of the contact treatment and the mass ratio of the polycondensation product to the organic solvent, the content of the oligomer can be regulated; when the temperature of the contact treatment is too high, the organic solvent volatilizes rapidly and is highly consumed; and when the temperature of the contact treatment is too low, an elution effect cannot be effectively achieved, leading to a too high content of the oligomer. When the time of the contact treatment is too long, the content of the organic solvent remaining in the polyester is too high; and when the time of the contact treatment is too short, an elution effect cannot be effectively achieved, leading to a too high content of the oligomer. When the mass ratio of the polycondensation product to the organic solvent is not within the range, that is, when the content of the organic solvent is too high, although an elution effect can be effectively improved, more solvent is consumed, more waste liquid is generated, economic efficiency is low, and the content of the organic solvent remaining in the polyester is too high; and when the content is too low, uniform dispersion of the polyester in the solution cannot be achieved, an elution effect is uneven, and the elution effect is poor.

In addition to the contact treatment in the step (4), polymerization conditions and an alcohol-acid ratio in the steps (1)-(3) also affect the content of the oligomer.

In the present invention, according to the method for preparing the aliphatic polyester, the aliphatic polyester may be prepared by allowing the polycondensation product to carry out the contact treatment, or prepared by allowing the polycondensation product to carry out a chain extension reaction (that is, the chain propagation reaction); and may also be prepared by allowing the polycondensation product to carry out chain extension first and then carry out the contact treatment.

In the present invention, the aliphatic polyester may also be prepared by the following method, that is, in step (1), succinic acid and/or a succinic acid derivative and sebacic acid and/or a sebacic acid derivative separately react with 1,4-butanediol to obtain two esterification products, and then the two esterification products are subjected to a subsequent pre-polymerization reaction, a polycondensation reaction, and optionally a chain propagation reaction and contact treatment.

Exemplarily, the preparation method specifically includes the following steps:
step (1-1): allowing succinic acid and/or a succinic acid derivative, 1,4-butanediol, and optionally a cross-linking agent to react under conditions of a temperature of 150-195°C and a pressure of 0.7-1.2 bar for 2-6 h to obtain an esterification product A; and
step (1-2): allowing sebacic acid and/or a sebacic acid derivative to react with 1,4-butanediol under conditions of a temperature of 180-220°C and a pressure of 0.6-1.1 bar for 2-6 h to obtain an esterification product B; and then mixing the esterification product A with the esterification product B, and carrying out a pre-polymerization reaction, a polycondensation reaction, and optionally a chain propagation reaction and contact treatment, where conditions for the pre-polymerization reaction, the polycondensation reaction, and optionally the chain propagation reaction and the contact treatment are selected from the same ranges as those of the step (2), the step (3), the aforementioned chain propagation reaction, and the step (4).

In a second aspect, the present invention provides a polyester composition, where the polyester composition includes the aliphatic polyester described in the first aspect.

Preferably, the polyester composition further includes at least one of a second polyester, a third polymer, and an auxiliary agent.

Preferably, the second polyester includes at least one of polylactic acid, an aliphatic-aromatic polyester, or other aliphatic polyesters.

Preferably, the second polyester includes at least one of polylactic acid (PLA), an aliphatic-aromatic polyester, or other aliphatic polyesters.

Preferably, the aliphatic-aromatic polyester includes at least one of poly(butylene succinate-co-terephthalate) (PBST), poly(butylene adipate-co-terephthalate) (PBAT), poly(butylene sebacate-co-terephthalate) (PBSeT), or poly(butylene adipate-co-furandicarboxylate) (PBAF).

Preferably, the other aliphatic polyesters include at least one of poly(butylene succinate) (PBS), poly(butylene succinate-co-adipate) (PBSA), or poly(butylene sebacate) (PBSe).

In the present invention, according to the standard ISO 1133-2-2012, under conditions of 190°C and 2.16 kg, a melt flow rate of the second polyester is 0.5-50 g/10 min.

In the present invention, the second polyester may be selected as a corresponding polyester according to actual needs, and is not limited to the polyesters mentioned above.

Preferably, the third polymer includes at least one of starch, cellulose, chitin, chitosan, alginate, protein, gelatin, natural rubber, lignin, or derivatives of the aforementioned substances.

In the present invention, the protein includes, but is not limited to, glutelin, zein, casein, collagen, etc.; and the lignin includes unpurified lignin, purified hydrolyzed lignin, alkali lignin, etc. The starch may also be used in allosteric or gelatinized forms or a filler form. The starch may represent a continuous phase or a dispersed phase, and may also be present in a co-continuous form.

In the present invention, the auxiliary agent may be added according to actual needs, including but not limited to at least one of an antioxidant, a lubricant, a light stabilizer, a mold release agent, or an antistatic agent.

In the present invention, the type of the auxiliary agent is not excessively limited, a conventional auxiliary agent may be used, and exemplarily, the antioxidant includes, but is not limited to, any one of antioxidant 1010, antioxidant 1076, antioxidant 168, antioxidant 164, antioxidant DLTP, or antioxidant TPP.

The light stabilizer includes, but is not limited to, at least one of hindered amine light stabilizers (such as light stabilizer 770, light stabilizer 622, light stabilizer 944, etc.), benzophenone light stabilizers (such as UV531), or benzotriazole light stabilizers.

The lubricant includes, but is not limited to, at least one of esters (such as polyethylene glycol esters and polyol esters), montanates, ethylene bis-stearamide, or polyethylene wax.

The mold release agent includes, but is not limited to, at least one of inorganic mold release agents (such as talc powder, mica powder, clay, etc.), organic mold release agents (such as fatty acids, paraffin, glycerol, petrolatum, etc.), or polymer mold release agents (such as silicone oil, polyethylene glycol, low-molecular-weight polyethylene, etc.).

The antistatic agent includes, but is not limited to, at least one of cationic antistatic agents (such as quaternary ammonium salts), anionic antistatic agents (such as alkyl sulfonates and phosphates), amphoteric antistatic agents (such as amphoteric imidazoline compounds), nonionic antistatic agents (such as hydroxyethyl alkylamines, fatty amides, polyoxyethylenes, and polyol esters), or polymer antistatic agents (such as polyethers).

As a preferred technical solution of the present invention, in parts by weight, the polyester composition includes 50-95 parts of the aliphatic polyester (for example, may be 50 parts, 55 parts, 60 parts, 65 parts, 70 parts, 75 parts, 80 parts, 85 parts, 90 parts, 95 parts, or a range between any of the above numerical values, preferably 52-92 parts, and further preferably 56-82 parts), 1-20 parts of the second polyester (for example, may be 1 part, 2 parts, 4 parts, 6 parts, 8 parts, 10 parts, 12 parts, 14 parts, 16 parts, 18 parts, 20 parts, or a range between any of the above numerical values, preferably 1.5-15 parts, and more preferably 2.5-8.5 parts), 1-30 parts of the third polymer (for example, may be 1 part, 2 parts, 4 parts, 6 parts, 8 parts, 10 parts, 12 parts, 14 parts, 16 parts, 18 parts, 20 parts, 22 parts, 24 parts, 25 parts, 26 parts, 28 parts, 30 parts, or a range between any of the above numerical values, preferably 9-27 parts, and more preferably 21-26.5 parts), and 0-15 parts of the auxiliary agent (for example, may be 1 part, 2 parts, 4 parts, 6 parts, 8 parts, 10 parts, 12 parts, 14 parts, 15 parts, or a range between any of the above numerical values).

In the present invention, a method for preparing the polyester composition includes: mixing and extruding the aliphatic polyester with optionally the second polyester, the third polymer, and the auxiliary agent to obtain the polyester composition, where an extruder includes a reactive extruder, and the extruder may be a single-screw extruder, a twin-screw extruder, or a multi-screw extruder; and a temperature of the extruding is 140-220°C, and a screw rotation speed during the extruding is 200-500 rpm.

In a third aspect, the present invention provides a packaging film, where a raw material for preparing the packaging film includes the aliphatic polyester described in the first aspect or the polyester composition described in the second aspect.

In the present invention, other substances may also be added into the raw material for preparing the packaging film according to actual needs, such as a colorant, a pigment, an inorganic filler, etc.; the pigment includes, but is not limited to, titanium dioxide, etc.; and the inorganic filler includes, but is not limited to, talc powder, calcium carbonate, kaolin, etc.

Preferably, an unwinding index of the packaging film is ≤ 3, further preferably ≤ 2.5, more preferably ≤ 2, and particularly preferably ≤ 1.5.

Preferably, according to the EU10-2011 standard, a total migration amount of the packaging film is ≤ 10 mg/dm² under OM6 test conditions using 10% ethanol as a simulation solution and under a condition of a packaging film thickness of 18±2 µm, and the total migration amount is further preferably ≤ 5 mg/dm².

In the present invention, the packaging film includes a plastic wrap, a shrink film, a wrapping film, etc.

The aliphatic polyester, the polyester composition containing the aliphatic polyester, and the packaging film prepared therefrom in the present invention are all biodegradable.

For the present invention, if a substance or a substance mixture shows, as defined in DIN EN 13432, a biodegradation percentage degree of at least 90%, the substance or the substance mixture has the characteristic of "biodegradability".

According to DIN EN 13432, during composting, air free of CO₂ is introduced into mature compost, and the compost is allowed to undergo a specific temperature process. Herein, the biodegradability is defined as a biodegradation percentage degree represented by a ratio of a net amount of CO₂ released by a sample (after subtracting an amount of CO₂ released by compost without the sample) to a maximum amount of CO₂ that can be released by the sample (calculated based on a carbon content in the sample). After the composting for only a few days, the biodegradable polyester and the biodegradable polyester composition usually show obvious signs of degradation, such as fungal growth, cracking, and perforation, etc.

Other methods for determining the biodegradability are also described in ASTM D5338 and ASTM D6400.

The numerical ranges in the present invention include not only the above-mentioned enumerated point values but also any point values within the above-mentioned numerical ranges that are not enumerated, and due to space limitations and for the sake of simplicity, all specific point values included within the ranges are not exhaustively enumerated in the present invention.

Compared with the prior art, the present invention has the following beneficial effects.

According to the aliphatic polyester provided by the present invention, by controlling the molar ratio of succinic acid to sebacic acid within a specific range and meanwhile controlling the content of the oligomer in the aliphatic polyester within a specific range, the packaging film including the aliphatic polyester possesses both good unwinding performance and food contact performance, and meanwhile, also has good degradability and can meet requirements such as home composting.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

In the present invention, all materials used can be purchased commercially or prepared by conventional methods; and unless otherwise specified, the materials used in the present invention are as follows:
1,4-butanediol: purchased from Xinjiang Markorchem Co., Ltd.;
succinic acid: purchased from Shandong Landian Biotechnology Co., Ltd.;
sebacic acid: purchased from Hengshui Jinghua Chemical Co., Ltd.;
glycerol: purchased from Aladdin;
tetrabutyl titanate: purchased from Jianyi Chemical Import and Export Co., Ltd.; and
hexamethylene diisocyanate: purchased from Aladdin.

In the present invention, test methods for molar contents of a succinic acid residue and a sebacic acid residue in an aliphatic polyester, a number-average molecular weight (Mn), an oligomer content, an intrinsic viscosity, and a carboxyl content are as follows.
1. The molar contents of the succinic acid residue and the sebacic acid residue in the aliphatic polyester are tested by a ¹HNMR method and specifically includes: weighing and dissolving 20 mg of the aliphatic polyester sample in 0.6 mL of deuterated chloroform, and then measuring its ¹HNMR at room temperature using a Bruker AV 500 nuclear magnetic resonance spectrometer; and performing integration on characteristic peaks of the succinic acid residue and the sebacic acid residue, and obtaining respective molar contents of the succinic acid residue and the sebacic acid residue in the aliphatic polyester according to proportions of peak areas. It should be noted that the contents of the succinic acid residue and the sebacic acid residue in the aliphatic polyester in Table 1 are calculated based on a total molar content of the succinic acid residue and the sebacic acid residue as 100 mol%. For example, when an integration area of the succinic acid residue is I1 and an integration area of the sebacic acid residue is I2, the molar percentage content of the succinic acid residue in the aliphatic polyester is I1/(I1+I2)×100%, where a characteristic chemical shift of the succinic acid residue is about 2.63 ppm, representing 4 hydrogens on two methylene groups -CH₂-CH₂- in succinic acid; and a characteristic chemical shift of the sebacic acid residue is about 1.30 ppm, representing 8 hydrogens on four methylene groups -CH₂-CH₂-CH₂-CH₂- in the middle of sebacic acid.
2. Mn and the oligomer content are tested using a gel permeation chromatograph (GPC) as follows: using a chromatographic system for determination at 40°C, with a set of three tandem columns (with a particle diameter of 5 µm and porosities of 500 Å, 1,000 Å, and 10,000 Å, respectively) and a refractive index detector, chloroform as an eluent (at an elution flow rate of 1 mL/min), and polystyrene as a reference standard, where an instrument model is: Waters 1515GPC, and a method for preparing a sample includes: directly dissolving the aliphatic polyester in chromatographic-grade tetrahydrofuran (THF) to formulate a 1 mg/mL solution for testing.
3. The intrinsic viscosity is tested according to the standard GB/T 17931-1999, specifically including: adding 0.1250±0.0002 g of the sample into 25 mL of a mixed solution of phenol and o-dichlorobenzene in a weight ratio of 1:1, heating until the sample is completely dissolved, and after the sample is completely dissolved, conducting testing using an Ubbelohde viscometer at a test temperature of 25±0.05°C.
4. The carboxyl content is tested according to the standard GB/T 32366-2015 and is specifically as follows: dissolving 1 g of the sample in 50 mL of a mixed solvent of phenol and trichloromethane in a volume ratio of 2:3; using a solution of potassium hydroxide in ethanol with a concentration of 0.01 mol/L as a standard titration solution and a bromophenol blue solution with a concentration of 0.2% as an indicator; conducting a blank test according to a method for testing the carboxyl content of the above test sample; and testing the sample in parallel twice, where a difference value between two test results is required to be less than or equal to 2 mol/t, and a final result is an average value of the two test results.

### Examples 1-16 and Comparative Examples 1-6

Examples 1-16 and Comparative Examples 1-6 respectively provide an aliphatic polyester, where the molecular structure composition, q1 and q2 values, carboxyl content, and intrinsic viscosity of the aliphatic polyester are shown in Table 1.

**Table 1**

| | Succinic acid residue content (mol%) | Sebacic acid residue content (mol%) | q1 (wt%) | q2 (wt%) | q2/q1 | Carboxyl content (mol/t) | Intrinsic viscosity (dL/g) |
|---|---|---|---|---|---|---|---|
| Example 1 | 87.6 | 12.4 | 0.73 | 1.09 | 1.49 | 19.4 | 1.74 |
| Example 2 | 82.1 | 17.9 | 0.40 | 0.45 | 1.13 | 16.8 | 1.76 |
| Example 3 | 75.6 | 24.4 | 0.36 | 0.44 | 1.22 | 16.3 | 1.75 |
| Example 4 | 70.6 | 29.4 | 0.33 | 0.48 | 1.45 | 17.8 | 1.72 |
| Example 5 | 66.0 | 34.0 | 0.62 | 0.91 | 1.47 | 20.0 | 1.68 |
| Example 6 | 70.6 | 29.4 | 0.30 | 0.36 | 1.20 | 17.5 | 1.73 |
| Example 7 | 70.7 | 29.3 | 0.15 | 0.22 | 1.47 | 16.8 | 1.65 |
| Example 8 | 70.2 | 29.8 | 0.54 | 0.78 | 1.44 | 18.5 | 1.73 |
| Example 9 | 70.3 | 29.7 | 0.08 | 0.12 | 1.50 | 22.5 | 1.68 |
| Example 10 | 70.4 | 29.6 | 0.96 | 1.42 | 1.48 | 24.8 | 1.74 |
| Example 11 | 70.5 | 29.5 | 0.24 | 0.26 | 1.08 | 17.0 | 1.69 |
| Example 12 | 70.6 | 29.4 | 0.60 | 0.95 | 1.58 | 28.4 | 1.99 |
| Example 13 | 70.7 | 29.3 | 0.30 | 0.58 | 1.93 | 26.7 | 1.82 |
| Example 14 | 70.7 | 29.3 | 0.36 | 0.52 | 1.44 | 18.6 | 1.75 |
| Example 15 | 70.4 | 29.6 | 0.45 | 0.83 | 1.84 | 7.5 | 1.52 |
| Example 16 | 70.6 | 29.4 | 0.87 | 1.64 | 1.89 | 35.5 | 2.14 |
| Comparative Example 1 | 70.3 | 29.7 | 1.40 | 3.50 | 2.50 | 19.8 | 1.76 |
| Comparative Example 2 | 70.6 | 29.4 | 0.02 | 0.03 | 1.50 | 16.4 | 1.65 |
| Comparative Example 3 | 59.9 | 40.1 | 0.68 | 1.55 | 2.28 | 22.0 | 1.45 |
| Comparative Example 4 | 93.7 | 6.3 | 1.65 | 4.54 | 2.75 | 18.7 | 1.80 |
| Comparative Example 5 | 60.0 | 40.0 | 0.56 | 1.08 | 1.93 | 20.8 | 1.43 |
| Comparative Example 6 | 93.5 | 6.5 | 0.98 | 1.93 | 1.97 | 23.5 | 1.74 |

Methods for preparing the aliphatic polyesters provided in Examples 1-16 and Comparative Examples 1-6 are as follows.

### Example 1

A method for preparing the aliphatic polyester is provided, which specifically includes the following steps:
(1) physically mixing 479 kg of succinic acid, 116 kg of sebacic acid, 560 kg of 1,4-butanediol, and 2.46 kg of glycerol, and after the mixing is completed, transferring the mixture into an esterification reactor to carry out an esterification reaction under conditions of a temperature of 200°C and a pressure of 1.1 bar for 3.5 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 240°C and a pressure of 0.52 bar for 120 min to obtain a pre-polymerization product;
(3) transferring the pre-polymerization product obtained in the step (2) into a horizontal reactor with a stirrer to carry out a polycondensation reaction under conditions of a temperature of 243°C and a pressure of 1.3 mbar for 90 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:5, a mass concentration of the tetrahydrofuran aqueous solution is 70%, a temperature of the contact treatment is 50°C, and a time of the contact treatment is 14 h.

### Example 2

A method for preparing the aliphatic polyester is provided, which specifically includes the following steps:
(1) physically mixing 433 kg of succinic acid, 162 kg of sebacic acid, 570 kg of 1,4-butanediol, and 2.46 kg of glycerol, and after the mixing is completed, transferring the mixture into an esterification reactor to carry out an esterification reaction under conditions of a temperature of 190°C and a pressure of 0.9 bar for 4 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 243°C and a pressure of 0.45 bar for 110 min to obtain a pre-polymerization product;
(3) transferring the pre-polymerization product obtained in the step (2) into a horizontal reactor with a stirrer to carry out a polycondensation reaction under conditions of a temperature of 243°C and a pressure of 1.1 mbar for 80 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:5, a mass concentration of the tetrahydrofuran aqueous solution is 65%, a temperature of the contact treatment is 55°C, and a time of the contact treatment is 14 h.

### Example 3

A method for preparing the aliphatic polyester is provided, which specifically includes the following steps:
(1) physically mixing 388 kg of succinic acid, 215 kg of sebacic acid, 560 kg of 1,4-butanediol, and 2.46 kg of glycerol, and after the mixing is completed, transferring the mixture into an esterification reactor to carry out an esterification reaction under conditions of a temperature of 205°C and a pressure of 1.0 bar for 4 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 238°C and a pressure of 0.40 bar for 95 min to obtain a pre-polymerization product;
(3) transferring the pre-polymerization product obtained in the step (2) into a horizontal reactor with a stirrer to carry out a polycondensation reaction under conditions of a temperature of 242°C and a pressure of 1.0 mbar for 80 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:5, a mass concentration of the tetrahydrofuran aqueous solution is 70%, a temperature of the contact treatment is 50°C, and a time of the contact treatment is 14 h.

### Example 4

A method for preparing the aliphatic polyester is provided, which specifically includes the following steps:
(1) physically mixing 350 kg of succinic acid, 250 kg of sebacic acid, 534 kg of 1,4-butanediol, and 2.46 kg of glycerol, and after the mixing is completed, transferring the mixture into an esterification reactor to carry out an esterification reaction under conditions of a temperature of 200°C and a pressure of 1.1 bar for 3.5 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 242°C and a pressure of 0.4 bar for 100 min to obtain a pre-polymerization product;
(3) transferring the pre-polymerization product obtained in the step (2) into a horizontal reactor with a stirrer to carry out a polycondensation reaction under conditions of a temperature of 242°C and a pressure of 1.1 mbar for 85 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:5, a mass concentration of the tetrahydrofuran aqueous solution is 70%, a temperature of the contact treatment is 50°C, and a time of the contact treatment is 14 h.

### Example 5

A method for preparing the aliphatic polyester is provided, which specifically includes the following steps:
(1) physically mixing 320 kg of succinic acid, 280 kg of sebacic acid, 534 kg of 1,4-butanediol, and 2.46 kg of glycerol, and after the mixing is completed, transferring the mixture into an esterification reactor to carry out an esterification reaction under conditions of a temperature of 180°C and a pressure of 0.8 bar for 3 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 243°C and a pressure of 0.60 bar for 110 min to obtain a pre-polymerization product;
(3) transferring the pre-polymerization product obtained in the step (2) into a horizontal reactor with a stirrer to carry out a polycondensation reaction under conditions of a temperature of 243°C and a pressure of 1.3 mbar for 90 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:4, a mass concentration of the tetrahydrofuran aqueous solution is 60%, a temperature of the contact treatment is 45°C, and a time of the contact treatment is 12 h.

### Example 6

A method for preparing the aliphatic polyester is provided, which is different from Example 4 in that in step (3), a pre-polymerization product obtained in step (2) is transferred into a horizontal reactor with a stirrer to carry out a polycondensation reaction under conditions of a temperature of 240°C and a pressure of 1.4 mbar for 60 min to obtain a polycondensation product; then the polycondensation product and hexamethylene diisocyanate (at a content of 0.20 wt% of the mass of the polycondensation product) are extruded in a reactive extruder at a temperature of 200°C for a residence time of 7 min to obtain a chain propagation product slice, with a hundred-grain weight of the slice as 3.7 g; and in step (4), the obtained chain propagation product slice is allowed to carry out a contact treatment process with a tetrahydrofuran aqueous solution to obtain the aliphatic polyester, where a mass ratio of the chain propagation product slice to the tetrahydrofuran aqueous solution is 1:6, a mass concentration of the tetrahydrofuran aqueous solution is 80%, a temperature of the contact treatment is 50°C, and a time of the contact treatment is 15 h. Other raw materials, use amounts, and preparation methods are all the same as those in Example 4.

### Example 7

A method for preparing the aliphatic polyester is provided, which is different from Example 4 in that in step (4), a polycondensation product slice obtained in step (3), with a hundred-grain weight of the slice as about 3.7 g, is allowed to carry out a contact treatment process with a tetrahydrofuran aqueous solution to obtain the aliphatic polyester, where a mass ratio of the polycondensation product slice to the tetrahydrofuran aqueous solution is 1:8, a mass concentration of the tetrahydrofuran aqueous solution is 85%, a temperature of the contact treatment is 55°C, and a time of the contact treatment is 16 h. Other raw materials, use amounts, and preparation methods are all the same as those in Example 4.

### Example 8

A method for preparing the aliphatic polyester is provided, which is different from Example 4 in that in step (4), a polycondensation product slice obtained in step (3), with a hundred-grain weight of the slice as about 3.7 g, is allowed to carry out a contact treatment process with an acetone aqueous solution to obtain the aliphatic polyester, where a mass ratio of the polycondensation product to the acetone aqueous solution is 1:5, a mass concentration of the acetone aqueous solution is 75%, a temperature of the contact treatment is 45°C, and a time of the contact treatment is 12 h. Other raw materials, use amounts, and preparation methods are all the same as those in Example 4.

### Example 9

A method for preparing the aliphatic polyester is provided, which is different from Example 4 in that in step (4), a polycondensation product slice obtained in step (3), with a hundred-grain weight of the slice as about 3.7 g, is allowed to carry out a contact treatment process with an ethanol aqueous solution to obtain the aliphatic polyester, where a mass ratio of the polycondensation product to the ethanol aqueous solution is 1:5, a mass concentration of the ethanol aqueous solution is 80%, a temperature of the contact treatment is 70°C, and a time of the contact treatment is 18 h. Other raw materials, use amounts, and preparation methods are all the same as those in Example 4.

### Example 10

A method for preparing the aliphatic polyester is provided, which includes the following steps:
(1) physically mixing 350 kg of succinic acid, 250 kg of sebacic acid, 534 kg of 1,4-butanediol, and 2.46 kg of glycerol, and after the mixing is completed, transferring the mixture into an esterification reactor to carry out an esterification reaction under conditions of a temperature of 180°C and a pressure of 1.1 bar for 2.5 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 240°C and a pressure of 0.45 bar for 100 min to obtain a pre-polymerization product;
(3) transferring the pre-polymerization product obtained in the step (2) into a horizontal reactor with a stirrer to carry out a polycondensation reaction under conditions of a temperature of 245°C and a pressure of 1.3 mbar for 95 min to obtain a polycondensation product; and
(4) slicing the polycondensation product obtained in the step (3) to obtain a slice with a hundred-grain weight of about 4.4 g, and allowing the slice to carry out a contact treatment process with a tetrahydrofuran aqueous solution to obtain the aliphatic polyester, where a mass ratio of the polycondensation product to the tetrahydrofuran aqueous solution is 1:3, a mass concentration of the tetrahydrofuran aqueous solution is 75%, a temperature of the contact treatment is 55°C, and a time of the contact treatment is 12 h.

### Example 11

A method for preparing the aliphatic polyester is provided, which is only different from Example 4 in that in step (3), a pre-polymerization product obtained in step (2) is transferred into a horizontal reactor with a stirrer to carry out a polycondensation reaction under conditions of a temperature of 242°C and a pressure of 1.1 mbar for 85 min to obtain a polycondensation product; and in step (4), the polycondensation product obtained in the step (3) is sliced to obtain a slice with a hundred-grain weight of about 3.7 g, and the slice is allowed to carry out a contact treatment process with a tetrahydrofuran aqueous solution, where a mass ratio of the polycondensation product to the tetrahydrofuran aqueous solution is 1:7, a mass concentration of the tetrahydrofuran aqueous solution is 75%, a temperature of the contact treatment is 55°C, and a time of the contact treatment is 14 h. Other raw materials, use amounts, and preparation methods are all the same as those in Example 4.

### Example 12

A method for preparing the aliphatic polyester is provided, which is only different from Example 4 in that in step (3), a pre-polymerization product obtained in step (2) is transferred into a horizontal reactor with a stirrer to carry out a polycondensation reaction under conditions of a temperature of 246°C and a pressure of 1.4 mbar for 50 min to obtain a polycondensation product; the polycondensation product and hexamethylene diisocyanate (at a content of 0.55 wt% of the mass of the polycondensation product) are extruded in a reactive extruder at a temperature of 210°C for a residence time of 9 min to obtain a chain propagation product slice; and in step (4), the chain propagation product slice obtained in the step (3), with a hundred-grain weight of the slice as about 4.0 g, is allowed to carry out a contact treatment process with an ethanol aqueous solution to obtain the aliphatic polyester, where a mass ratio of the chain propagation product slice to the ethanol aqueous solution is 1:4, a mass concentration of the ethanol aqueous solution is 70%, a temperature of the contact treatment is 50°C, and a time of the contact treatment is 12 h. Other raw materials, use amounts, and preparation methods are all the same as those in Example 4.

### Example 13

A method for preparing the aliphatic polyester is provided, which is different from Example 4 as follows:
(1-1) physically mixing 350 kg of succinic acid with 290 kg of 1,4-butanediol and 2.76 kg of glycerol, and after the mixing is completed, transferring the mixture into an esterification reactor to carry out an esterification reaction under conditions of a temperature of 170°C and a pressure of 1.1 bar for 4 h to obtain an esterification product A; and
(1-2) physically mixing 245 kg of sebacic acid with 260 kg of 1,4-butanediol, and after the mixing is completed, transferring the mixture into an esterification reactor to carry out an esterification reaction under conditions of a temperature of 210°C and a pressure of 1.0 bar for 3 h to obtain an esterification product B. After the esterification product A and the esterification product B are mixed, steps (2), (3), and (4) are carried out. Other raw materials, use amounts, and preparation methods are all the same as those in Example 4.

### Example 14

A method for preparing the aliphatic polyester is provided, which is different from Example 4 in that in step (4), a polycondensation product slice obtained in step (3), with a hundred-grain weight of the slice as about 3.7 g, is allowed to carry out a contact treatment process with a cyclohexane solution to obtain the aliphatic polyester, where a mass ratio of the polycondensation product to the cyclohexane solution is 1:8, a mass concentration of the cyclohexane solution is 100%, a temperature of the contact treatment is 70°C, and a time of the contact treatment is 16 h. Other raw materials, use amounts, and preparation methods are all the same as those in Example 4.

### Example 15

A method for preparing the aliphatic polyester is provided, which includes the following steps:
(1-1) physically mixing 350 kg of succinic acid with 310 kg of 1,4-butanediol and 3.25 kg of glycerol, and after the mixing is completed, transferring the mixture into an esterification reactor to carry out an esterification reaction under conditions of a temperature of 190°C and a pressure of 0.9 bar for 4 h to obtain an esterification product A;
(1-2) physically mixing 245 kg of sebacic acid with 290 kg of 1,4-butanediol, and after the mixing is completed, transferring the mixture into an esterification reactor to carry out an esterification reaction under conditions of a temperature of 210°C and a pressure of 0.8 bar for 4 h to obtain an esterification product B;
(2) transferring the esterification product A obtained in the step (1-1) and the esterification product B obtained in the step (1-2) into a vertical reactor with a stirrer, adding 0.48 kg of tetrabutyl titanate, and carrying out a pre-polymerization reaction under conditions of a temperature of 240°C and a pressure of 0.5 bar for 100 min to obtain a pre-polymerization product;
(3) transferring the pre-polymerization product obtained in the step (2) into a horizontal reactor with a stirrer to carry out a polycondensation reaction under conditions of a temperature of 245°C and a pressure of 1.0 mbar for 90 min to obtain a polycondensation product; and
(4) slicing the polycondensation product obtained in the step (3) to obtain a slice with a hundred-grain weight of about 3.2 g, and allowing the slice to carry out a contact treatment process with a tetrahydrofuran solution to obtain the aliphatic polyester, where a mass ratio of the polycondensation product to the tetrahydrofuran solution is 1:6, a mass concentration of the tetrahydrofuran solution is 100%, a temperature of the contact treatment is 55°C, and a time of the contact treatment is 18 h.

### Example 16

A method for preparing the aliphatic polyester is provided, which is only different from Example 4 in that in step (3), a pre-polymerization product obtained in step (2) is transferred into a horizontal reactor with a stirrer to carry out a polycondensation reaction under conditions of a temperature of 242°C and a pressure of 1.4 mbar for 70 min to obtain a polycondensation product; the polycondensation product and hexamethylene diisocyanate (at a content of 0.72 wt% of the mass of the polycondensation product) are extruded in a reactive extruder at a temperature of 230°C for a residence time of 12 min to obtain a chain propagation product slice; and in step (4), the obtained chain propagation product slice, with a hundred-grain weight of the slice as about 4.4 g, is allowed to carry out a contact treatment process with an ethanol aqueous solution to obtain the aliphatic polyester, where a mass ratio of the chain propagation product slice to the ethanol aqueous solution is 1:4, a mass concentration of the ethanol aqueous solution is 65%, a temperature of the contact treatment is 65°C, and a time of the contact treatment is 10 h. Other raw materials, use amounts, and preparation methods are all the same as those in Example 4.

### Comparative Example 1

A method for preparing the aliphatic polyester is provided, which is different from Example 4 in that the step (4) is not carried out. Other raw materials, use amounts, and preparation methods are all the same as those in Example 4.

### Comparative Example 2

A method for preparing the aliphatic polyester is provided, which is different from Example 4 in that in step (4), a polycondensation product slice obtained in step (3), with a hundred-grain weight of the slice as about 3.7 g, is allowed to carry out a contact treatment process with a tetrahydrofuran aqueous solution to obtain the aliphatic polyester, where a mass ratio of the polycondensation product to the tetrahydrofuran aqueous solution is 1:10, a mass concentration of the tetrahydrofuran aqueous solution is 85%, a temperature of the contact treatment is 55°C, and a time of the contact treatment is 20 h. Other raw materials, use amounts, and preparation methods are all the same as those in Example 4.

### Comparative Example 3

A method for preparing the aliphatic polyester is provided, which specifically includes the following steps:
(1) physically mixing 275 kg of succinic acid, 315 kg of sebacic acid, 534 kg of 1,4-butanediol, and 2.46 kg of glycerol, and after the mixing is completed, transferring the mixture into an esterification reactor to carry out an esterification reaction under conditions of a temperature of 200°C and a pressure of 1.0 bar for 3 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 240°C and a pressure of 0.70 bar for 115 min to obtain a pre-polymerization product;
(3) transferring the pre-polymerization product obtained in the step (2) into a horizontal reactor with a stirrer to carry out a polycondensation reaction under conditions of a temperature of 246°C and a pressure of 1.1 mbar for 100 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:5, a mass concentration of the tetrahydrofuran aqueous solution is 70%, a temperature of the contact treatment is 50°C, and a time of the contact treatment is 14 h.

### Comparative Example 4

A method for preparing the aliphatic polyester is provided, which specifically includes the following steps:
(1) physically mixing 535 kg of succinic acid, 60 kg of sebacic acid, 534 kg of 1,4-butanediol, and 2.46 kg of glycerol, and after the mixing is completed, transferring the mixture into an esterification reactor to carry out an esterification reaction under conditions of a temperature of 200°C and a pressure of 1.1 bar for 3.5 h to obtain an esterification product;
(2) transferring the esterification product obtained in the step (1) into a vertical reactor with a stirrer, adding 0.48 kg of tetrabutyl titanate, and carrying out a pre-polymerization reaction under conditions of a temperature of 243°C and a pressure of 0.50 bar for 120 min to obtain a pre-polymerization product;
(3) transferring the pre-polymerization product obtained in the step (2) into a horizontal reactor with a stirrer to carry out a polycondensation reaction under conditions of a temperature of 245°C and a pressure of 1.2 mbar for 90 min to obtain a polycondensation product; and
(4) slicing the polycondensation product obtained in the step (3) to obtain a slice with a hundred-grain weight of about 3.7 g, and allowing the slice to carry out a contact treatment process with a tetrahydrofuran aqueous solution to obtain the aliphatic polyester, where a mass ratio of the polycondensation product to the tetrahydrofuran aqueous solution is 1:5, a mass concentration of the tetrahydrofuran aqueous solution is 70%, a temperature of the contact treatment is 50°C, and a time of the contact treatment is 14 h.

### Comparative Example 5

A method for preparing the aliphatic polyester is provided, which is different from Comparative Example 3 in that in step (4), a polycondensation product slice obtained in step (3), with a hundred-grain weight of the slice as about 3.2 g, is allowed to carry out a contact treatment process with a tetrahydrofuran aqueous solution to obtain the aliphatic polyester, where a mass ratio of the polycondensation product to the tetrahydrofuran aqueous solution is 1:8, a mass concentration of the tetrahydrofuran aqueous solution is 90%, a temperature of the contact treatment is 55°C, and a time of the contact treatment is 16 h. Other raw materials, use amounts, and preparation methods are all the same as those in Comparative Example 3.

### Comparative Example 6

A method for preparing the aliphatic polyester is provided, which is different from Comparative Example 4 in that in step (4), a polycondensation product slice obtained in step (3), with a hundred-grain weight of the slice as about 3.0 g, is allowed to carry out a contact treatment process with an ethanol aqueous solution to obtain the aliphatic polyester, where a mass ratio of the polycondensation product to the ethanol aqueous solution is 1:8, a mass concentration of the ethanol aqueous solution is 70%, a temperature of the contact treatment is 70°C, and a time of the contact treatment is 18 h. Other raw materials, use amounts, and preparation methods are all the same as those in Comparative Example 4.

### Performance testing

The aliphatic polyesters provided in Examples 1-16 and Comparative Examples 1-6 were subjected to casting by the following method to prepare plastic wraps.

A screw temperature was 145-150°C; a die head temperature was 165°C; a cooling temperature was 10°C; a main machine feeding speed was 27.2 kg/h, a traction roller was 11.5 Hz; and a winding roller was 11.8-13.2 Hz.

The unwinding performance, food contact performance, and disintegration periods of the obtained plastic wraps were tested.

In the present invention, a method for assessing an unwinding index includes: tearing open completely wound plastic wraps (with a width of 30 cm and a thickness of 10±2 µm) by about 10 cm, holding the wraps to a height of 1 m by both hands, allowing the wound wraps to free fall, and assessing unwinding indexes of the plastic wraps according to the time for the wound wraps to fall to the ground, where the unwinding index of 1.0 represents free fall within 1 s; the unwinding index of 1.5 represents free fall within 3 s; the unwinding index of 2.0 represents free fall within 5 s; the unwinding index of 2.5 represents free fall within 7 s; the unwinding index of 3.0 represents free fall within 10 s; the unwinding index of 4.0 represents free fall within 15 s; and the unwinding index of 5.0 represents free fall within 20 s. The lower unwinding index indicates better unwinding performance.

In the present invention, the food contact performance is characterized by a migration amount of an oligomer in a plastic wrap and specifically includes: according to the EU10-2011 standard, testing the migration amount under OM6 test conditions using 10% ethanol as a simulation solution and under a condition of a plastic wrap thickness of 18±2 µm.

### Disintegration period:

The aliphatic polyesters were molded into products with a dimension of 10 cm × 10 cm and a thickness of 18±2 µm, a home composting test was conducted according to the standard AS5810-2010, and a biological disintegration rate after composting for 16 weeks was recorded.

Specific test results are shown in Table 2.

**Table 2**

| | Unwinding index | Total migration and precipitation amount (mg/dm²) | Biological disintegration rate (%) |
|---|---|---|---|
| Example 1 | 1.0 | 8.5 | 86 |
| Example 2 | 1.0 | 3.9 | 93 |
| Example 3 | 1.0 | 3.9 | 93 |
| Example 4 | 1.0 | 4.2 | 94 |
| Example 5 | 1.0 | 7.7 | 96 |
| Example 6 | 1.5 | 3.6 | 93 |
| Example 7 | 2.0 | 3.1 | 94 |
| Example 8 | 1.0 | 6.2 | 95 |
| Example 9 | 2.5 | 1.8 | 95 |
| Example 10 | 1.0 | 9.3 | 90 |
| Example 11 | 1.5 | 3.3 | 92 |
| Example 12 | 2.0 | 8.0 | 92 |
| Example 13 | 2.5 | 5.2 | 92 |
| Example 14 | 1.0 | 4.2 | 95 |
| Example 15 | 3.0 | 7.8 | 94 |
| Example 16 | 3.0 | 9.8 | 90 |
| Comparative Example 1 | 1.0 | 13.7 | 92 |
| Comparative Example 2 | 5.0 | 0.8 | 91 |
| Comparative Example 3 | 3.0 | 9.6 | 96 |
| Comparative Example 4 | 2.5 | 17.3 | 78 |
| Comparative Example 5 | 3.5 | 8.2 | 96 |
| Comparative Example 6 | 3.0 | 10.8 | 77 |

It can be known from Table 2 that according to the aliphatic polyester of the present invention, by regulating the ratio of the succinic acid residue to the sebacic acid residue and controlling the content of the oligomer within a specific range, the packaging film including the aliphatic polyester can possess both good food contact performance and unwinding performance, and under home composting conditions, has a high biological disintegration rate and can meet home composting requirements.

The specific examples described above are to further describe the objectives, technical solutions, and beneficial effects of the present invention in detail. It should be understood that the above descriptions are only specific examples of the present invention and are not intended to limit the present invention, and any modifications, equivalent substitutions, improvements, and the like made within the spirit and principles of the present invention should all be included within the scope of protection of the present invention.

## Claims

1. An aliphatic polyester, comprising a dicarboxylic acid residue and a diol residue, wherein
the dicarboxylic acid residue comprises the following residues:
a1) based on a total molar percentage content of a1) and a2) as 100 mol%, 65-90 mol% of a succinic acid residue; and
a2) based on the total molar percentage content of a1) and a2) as 100 mol%, 10-35 mol% of a sebacic acid residue;
the diol residue is selected from a 1,4-butanediol residue with a molar content at least equal to that of the dicarboxylic acid residue; and
the aliphatic polyester comprises an oligomer with a number-average molecular weight < 1,000 as measured by gel permeation chromatography (GPC), and a mass percentage content of the oligomer with the number-average molecular weight < 1,000 as measured by GPC in the aliphatic polyester is 0.08-3.45 wt%.

2. The aliphatic polyester according to claim 1, wherein the oligomer with the number-average molecular weight < 1,000 as measured by GPC in the aliphatic polyester has the following characteristics: $0.05 wt % < {q}_{1} < 1.0 wt % ;$ and $0.1 wt % < {q}_{2} < 2.5 wt % ,$ wherein
q₁ is a mass percentage content of an oligomer with a number-average molecular weight of less than 500 in the aliphatic polyester as measured by GPC;
q₂ is a mass percentage content of an oligomer with a number-average molecular weight of less than 1,000 in the aliphatic polyester as measured by GPC;
preferably, q₁ is 0.1-0.6 wt%; and
preferably, q₂ is 0.2-1.3 wt%.

3. The aliphatic polyester according to claim 2, wherein a ratio of q₂ to q₁ is < 2, and the ratio of q₂ to q₁ is preferably < 1.5.

4. The aliphatic polyester according to any one of claims 1-3, wherein the dicarboxylic acid residue comprises the following residues:
a1) based on the total molar percentage content of a1) and a2) as 100 mol%, 74-85 mol% of the succinic acid residue; and
a2) based on the total molar percentage content of a1) and a2) as 100 mol%, 15-26 mol% of the sebacic acid residue.

5. The aliphatic polyester according to any one of claims 1-4, wherein according to GB/T 32366-2015, a carboxyl content of the aliphatic polyester is < 40 mol/t, further preferably < 30 mol/t, and more preferably < 22 mol/t.

6. The aliphatic polyester according to any one of claims 1-5, wherein according to GB/T 17931-1999, an intrinsic viscosity of the aliphatic polyester is 1-3 dL/g.

7. A polyester composition, comprising the aliphatic polyester according to any one of claims 1-6.

8. The polyester composition according to claim 7, further comprising at least one of a second polyester, a third polymer, and an auxiliary agent, wherein
preferably, the second polyester comprises at least one of polylactic acid, an aliphatic-aromatic polyester, or other aliphatic polyesters;
preferably, the aliphatic-aromatic polyester comprises at least one of poly(butylene succinate-co-terephthalate), poly(butylene adipate-co-terephthalate), poly(butylene sebacate-co-terephthalate), or poly(butylene adipate-co-furandicarboxylate);
preferably, the other aliphatic polyesters comprise at least one of poly(butylene succinate), poly(butylene succinate-co-adipate), or poly(butylene sebacate); and
preferably, the third polymer comprises at least one of starch, cellulose, chitin, chitosan, alginate, protein, gelatin, natural rubber, lignin, or derivatives of the aforementioned substances.

9. A packaging film, wherein a raw material for preparing the packaging film comprises the aliphatic polyester according to any one of claims 1-6 or the polyester composition according to claim 7 or 8.

10. The packaging film according to claim 9, wherein an unwinding index of the packaging film is ≤ 3; and
preferably, according to the EU10-2011 standard, a total migration amount of the packaging film is ≤ 10 mg/dm² under OM6 test conditions using 10% ethanol as a simulation solution and under a condition of a packaging film thickness of 18±2 µm.
